# EUROPEAN PATENT SPECIFICATION

(11) **EP 2 827 661 B1**
(45) Date of publication and mention of the grant of the patent: **01.01.2020**
(21) Application number: 12871083.7
(22) Date of filing: 17.04.2012
(51) Int. Cl.: H04W 4/70, H04W 8/12

(54) **SYSTEM, APPARATUS, AND METHOD FOR TRIGGERING ROAMING MTC DEVICE**
SYSTEM, VORRICHTUNG UND VERFAHREN ZUM AUSLÖSEN EINER ROAMING-MTC-VORRICHTUNG
SYSTÈME, APPAREIL ET PROCÉDÉ D'ACTIVATION D'UN DISPOSITIF MTC EN ITINÉRANCE

(30) Priority: 12.03.2012 CN 201210063483
(43) Date of publication of application: 21.01.2015
(73) Proprietor: ZTE Corporation, Shenzhen, Guangdong 518057 (CN)
(72) Inventor: YU, Wantao, Shenzhen Guangdong 518057 (CN)
(74) Representative: Mozzi, Matteo
(86) International application number: PCT/CN2012/074198
(87) International publication number: WO 2013/134986

(56) References cited:
- EP-A1- 2 288 205
- CN-A- 101 043 719
- ZTE: "Architecture Considerations - some clarifications", 3GPP DRAFT; S2-114838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20111114 - 20111118, 7 November 2011 (2011-11-07), XP050575269, [retrieved on 2011-11-07]
- SAMSUNG: "MTCsp (MTCsms) and roaming", 3GPP DRAFT; S2-114091_MTCSP_ROAMING-DISCUSSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Jeju Island; 20111010, 4 October 2011 (2011-10-04), XP050549274, [retrieved on 2011-10-04]
- '3rd Generation Partnership Project; Technical Specification Group Services and System Aspects; System Improvements for Machine-Type Communications (Release 11)' 3GPP TR 23.888 V1.6.1 February 2012, XP055166919

## Description

### Technical Field

The present invention relates to the field of mobile communications, in particular to a system, an apparatus and a method for triggering a roaming Machine Type Communication (MTC) device.

### Background

The MTC refers to the general term of a series of technologies which apply the wireless communication technology to implement machine-to-machine and machine-to-man data communication and data exchange and their combinations. The MTC has two meanings: one refers to the machine itself, wherein the machine is called an intelligent device in the embedded field, and the other refers to a machine-to-machine connection, wherein the machines are connected together by the internet. The MTC is widely applied, for example, it is applied to intelligent measurement, remote monitoring, tracking, medical treatment and the like. Due to the application of the MTC, the human life is more intelligent. Compared with the traditional man-to-man communication, the MTC devices applied by the MTC are large in number and widely applied, thereby having a great market prospect.

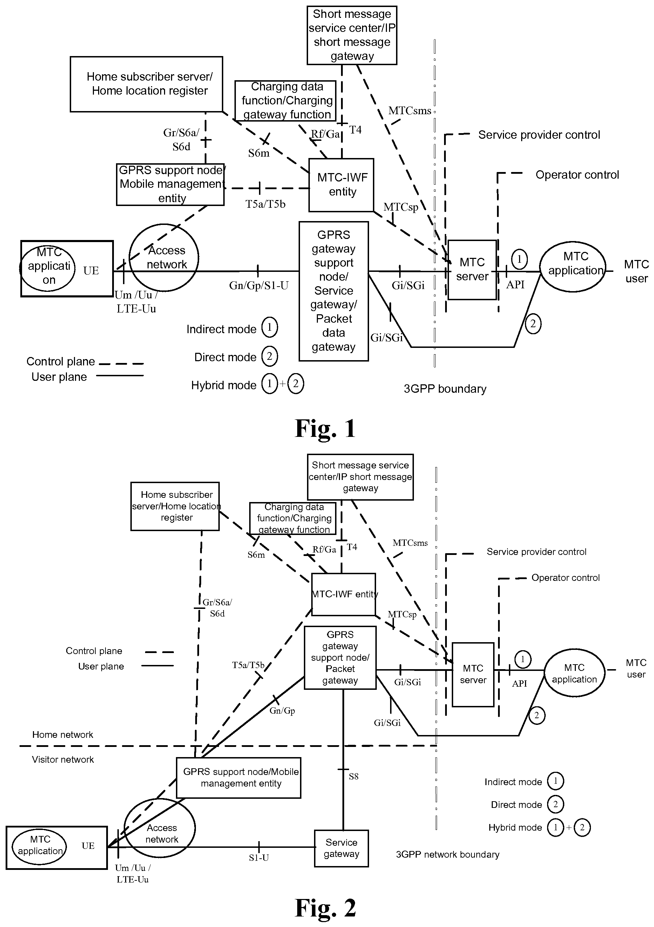

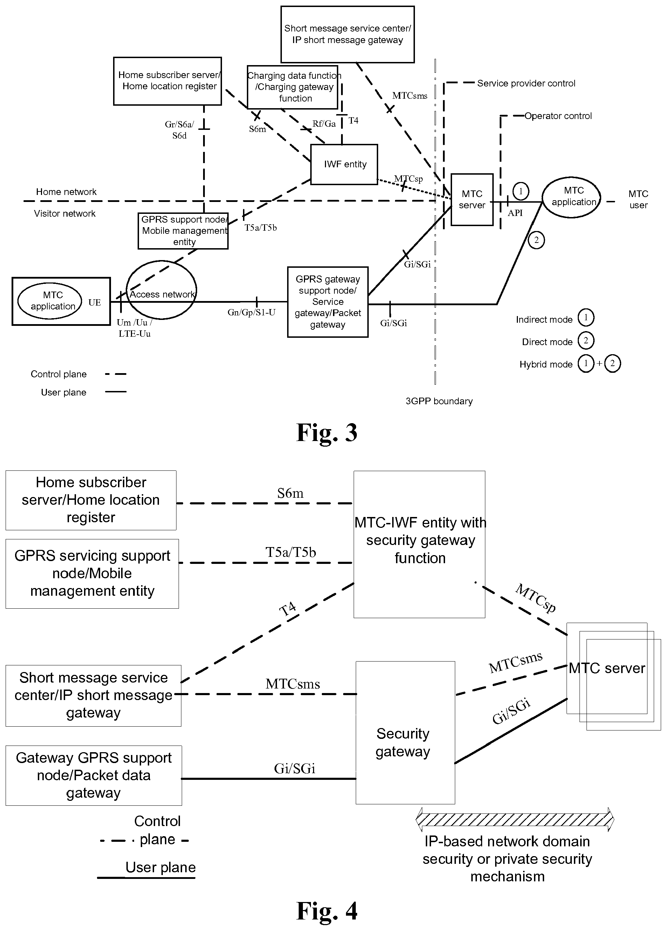

The system architecture of MTC can be simply described by the system architecture shown in Fig. 1. When an MTC device roams, in the home network route scenario of the MTC device, the system architecture of the MTC can be described by the system architecture shown in Fig. 2, and in a local breakout scenario, the system architecture of the MTC can be described by the system architecture shown in Fig. 3. Seen from the system architectures of MTC in Figs. 1, 2 and 3, based on the current roaming and non-roaming system architectures of the MTC device, when the MTC device roams, the related communications of the MTC device may generate related signaling and communication data traffic in a home network and a visitor network, and particularly when a large number of MTC devices roam, the signaling and communication data traffic generated may occupy many network resources, so as to affect the communication of a normal non-MTC device.

In the system architectures of MTC, the MTC device communicates with an MTC server through a 3rd Generation Partnership Project (3GPP) network and an MTC InterWorking Function (MTC-IWF) entity. On security grounds, when the MTC server is not in the 3GPP network, an MTC security gateway can be introduced to authenticate and authorize the MTC server so as to ensure the communication security of an IWF entity. After the MTC security gateway is introduced, the connection system architecture of the IWF entity is as shown in Fig. 4. Seen from the system architectures of MTC in Figs. 1, 2 and 3 and the connection system architecture of the IWF entity in Fig. 4, when the MTC server is not in the 3GPP network, and the MTC security gateway is introduced to serve as the MTC-IWF entity, the communication security of the IWF entity is ensured, whereas, based on the current system architecture of MTC, when the MTC device roams, it is necessary to send a triggering request and a triggering instruction to the related nodes of a home network through the MTC-IWF entity if the MTC server needs to trigger the MTC device roaming to the visitor network; then, the home network further sends the triggering request and the triggering instruction to the visitor network, and the visitor network sends the triggering request and the triggering instruction to the roaming MTC device to trigger the roaming MTC device. However, when a large number of roaming MTC devices need to be triggered, a lot of signalling traffic may be generated in both the visitor network and the home network the triggering process above. Therefore, in the conventional art, a lot of signalling traffic may be generated in the home network when security is ensured in the process of triggering the roaming MTC device, so as to occupy many resources of the home network, accordingly, the communication of a normal non-roaming MTC device may be affected and the communication quality of the home network may be reduced.

Document ZTE, "Architecture Considerations - some clarifications", 3GPP DRAFT; S2-114838, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, (20111107), provides details concerning Roaming Architecture for 3GPP Machine-Type Communication.

Document SAMSUNG, "MTCsp (MTCsms) and roaming", 3GPP DRAFT; S2-114091_MTCSP_ROAMING-DISCUSSION, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX ; FRANCE, (20111004), provides the solutions for the roaming architecture which is FFS.

### Summary

The present invention provides a system, an apparatus and a method for triggering a roaming MTC device, so as to at least solve the problem that a lot of signaling traffic may be generated in a home network when security is ensured in the process of triggering the roaming MTC device in the conventional art.

In one aspect, the present invention provides a system for triggering a roaming MTC device, including: an MTC-IWF entity of a home network and an MTC-IWF entity of a visitor network, wherein the MTC-IWF entity of the home network is configured to receive the registration information reported by the roaming MTC device, determine the MTC-IWF entity of the visitor network to which the MTC device is currently attached according to the registration information reported by the roaming MTC device when receiving a triggering request message for triggering the roaming MTC device from an MTC server, and send the triggering request message to the MTC-IWF entity of the visitor network; and the MTC-IWF entity of the visitor network is configured to receive the triggering request message and trigger the roaming MTC device.

Preferably, the MTC-IWF entity of the home network may be further configured to receive the registration information reported by the roaming MTC device before sending the triggering request message to the MTC-IWF entity of the visitor network, and create a routing relationship between itself and the MTC-IWF entity of the visitor network according to the registration information reported by the roaming MTC device.

Preferably, the MTC-IWF entity of the home network may be further configured to perform security authentication with the MTC server of the home network after receiving the triggering request message from the MTC server, and send the triggering request message to the MTC-IWF entity of the visitor network according to the registration information after the security authentication is passed.

Preferably, the registration information includes at least one of the following: subscriber identity information of the roaming MTC device, identity information of the roaming MTC device, and network identity information of the visitor network, wherein the MTC-IWF entity of the home network saves, maintains and manages the registration information. Specifically, the MTC-IWF entity of the home network updates the saved registration information according to the registration information newly reported by the MTC device when the roaming MTC device roams to other visitor networks besides the visitor network, and deletes the saved registration information when the roaming MTC device is detached.

Preferably, the MTC-IWF entity is one of the following: an MTC security gateway, an IWF entity with an MTC security gateway function, and their combination, wherein the MTC security gateway of the MTC-IWF entity in the home network is interconnected with that of the MTC-IWF entity in the visitor network; and the IWF entity with an MTC security gateway function of the MTC-IWF entity of the home network is interconnected with that of the MTC-IWF entity in the visitor network.

In another aspect, the present invention provides an apparatus for triggering a roaming MTC device, including: a first receiving module, configured to receive registration information reported by an MTC device which belongs to a first network (equivalent to a home network) and currently roams to a second network (equivalent to a visitor network), a second receiving module, configured to receive a triggering request message for triggering the MTC device (equivalent to the roaming MTC device) from an MTC server, and a sending module, configured to send the triggering request message to the MTC-IWF entity of the second network according to the registration information when receiving the triggering request message for triggering the MTC device from the MTC server.

Preferably, the sending module includes: an authentication unit, configured to perform security authentication with the MTC server of the first network after receiving the triggering request message, and a sending unit, configured to send the triggering request message to the MTC-IWF entity of the second network according to the registration information after the security authentication is passed.

Preferably, the registration information includes at least one of the following information: subscriber identity information of the MTC device, identity information of the MTC device and network identity information of the second network.

In another aspect, the present invention provides an apparatus for triggering a roaming MTC device, including: a third receiving module, configured to receive a triggering request message from an IWF entity of a first network, wherein the triggering request message is used for triggering an MTC device which belongs to the first network and currently roams to a second network, and a triggering module, configured to trigger the MTC device roaming to the second network according to the triggering request message.

In another aspect, the present invention provides a method for triggering a roaming MTC device, including the following steps that: when a triggering request message for triggering an MTC device which belongs to a first network and currently roams to a second network is received from an MTC server, the MTC-IWF entity of the first network determines the MTC-IWF entity of the second network according to the registration information reported by the MTC device; and the MTC-IWF entity of the first network sends the triggering request message to the MTC-IWF entity of the second network determined to trigger the MTC device.

Preferably, before the MTC-IWF entity of the second network is determined according to the registration information reported by the MTC device, the method for triggering the roaming MTC device may further include the steps that: when the MTC device is attached to the second network, the MTC-IWF entity of the first network receives the registration information from the MTC device and saves it; and the MTC-IWF entity of the first network creates a routing relationship between itself and the MTC-IWF entity of the second network according to the registration information.

Preferably, triggering the MTC device includes the steps that: the MTC-IWF entity of the second network triggers the MTC device according to the triggering request message after receiving the triggering request message; or, the MTC-IWF entity of the second network sends the triggering request message to a predetermined network entity in the second network after receiving the triggering request message, and the predetermined network entity in the second network triggers the MTC device according to the triggering request message after receiving the triggering request message.

Preferably, the step that the MTC-IWF entity of the first network sends the triggering request message to the MTC-IWF entity of the second network determined includes that: the MTC-IWF entity of the first network performs security authentication with the MTC server of the first network after receiving the triggering request message for triggering the MTC device from the MTC server; and after the security authentication is passed, the MTC-IWF entity of the first network sends the triggering request message to the MTC-IWF entity of the second network according to the registration information.

Preferably, the registration information includes at least one of the following information: subscriber identity information of the MTC device, identity information of the MTC device, and network identity information of the second network, wherein the MTC-IWF entity of the first network saves, maintains and manages the registration information. Specifically, the MTC-IWF entity of the first network updates the saved registration information according to the registration information newly reported by the MTC device when the MTC device roams to other visitor networks besides the visitor network, and deletes the saved registration information of the MTC device when the MTC device is detached.

Preferably, the MTC-IWF entity is one of the following entities: an MTC security gateway, an IWF entity with an MTC security gateway function, and their combination, wherein the MTC security gateway of the MTC-IWF entity of the first network is interconnected with that of the MTC-IWF entity of the second network; and the IWF entity with the MTC security gateway function of the MTC-IWF entity of the first network is interconnected with that of the MTC-IWF entity of the second network.

In the present invention, the MTC-IWF entity of the home network receives the registration information reported by the roaming MTC device, and sends the triggering request message to the MTC-IWF entity of the visitor network according to the registration information when receiving the triggering request message for triggering the roaming MTC device from the MTC server, and the MTC-IWF entity of the visitor network sends the triggering request message to the roaming MTC device to trigger the roaming MTC device, so that the MTC-IWF entity of the home network determines the MTC-IWF entity of the visitor network to which the MTC device is currently attached according to the registration information after receiving the triggering request message and sends the triggering request message to the MTC-IWF entity of the visitor network, the triggering request message is prevented from being sent to the related nodes of the home network to be sent to the visitor network by the related nodes of the home network, and security is ensured in the process of the triggering the roaming MTC device; and moreover, the signalling traffic generated in the home network in the triggering process is reduced, and less resources of the home network are occupied, thereby improving the performance of the home network and promoting the improvement of the communication quality of the home network and the user experience.

### Brief Description of the Drawings

The drawings illustrated here are to provide further understanding of the present invention and constitute one part of the application, and the exemplary embodiments of the present invention and the explanations thereof are intended to explain the present invention, instead of improperly limiting the present invention. In the drawings:
Fig. 1 is a diagram showing a system architecture of the existing MTC;
Fig. 2 is a diagram showing another system architecture of the existing MTC;
Fig. 3 is a diagram showing another system architecture of the existing MTC;
Fig. 4 is a diagram showing a connection system architecture of an existing IWF entity;
Fig. 5 is a block diagram showing a structure of a system for triggering a roaming MTC device according to an embodiment of the present invention;
Fig. 6 is a diagram showing an architecture of a system for triggering a roaming MTC device according to a preferred example of the present invention;
Fig. 7 is a diagram showing another architecture of a system for triggering a roaming MTC device according to a preferred example of the present invention;
Fig. 8 is a block diagram showing a structure of an apparatus for triggering a roaming MTC device according to an embodiment of the present invention;
Fig. 9 is a block diagram showing a structure of another apparatus for triggering a roaming MTC device according to a preferred embodiment of the present invention;
Fig. 10 is a block diagram showing a structure of a sending module according to a preferred embodiment of the present invention;
Fig. 11 is a flowchart of a method for trigging a roaming MTC device according to an embodiment of the present invention;
Fig. 12 is a flowchart of a method for trigging a roaming MTC device according to an example of the present invention;
Fig. 13 is another flowchart of a method for trigging a roaming MTC device according to an example of the present invention; and
Fig. 14 is another flowchart of a method for trigging a roaming MTC device according to an example of the present invention.

### Detailed Description of the Embodiments

The present invention will be described below in reference to the drawings and the embodiments in detail. It should be noted that, in case of no conflict, the embodiments of the application and features therein can be combined with one another.

In the embodiments below, the communication can be implemented by wireless connection or wired connection or their combination, which is not limited here.

Because the connection modes of MTC-IWF entities in roaming and non-roaming system architectures have a major impact on the communication security and roaming of a roaming MTC device supported by an MTC system, only the connection ways of the 3GPP network and an external interface system are described below as an example.

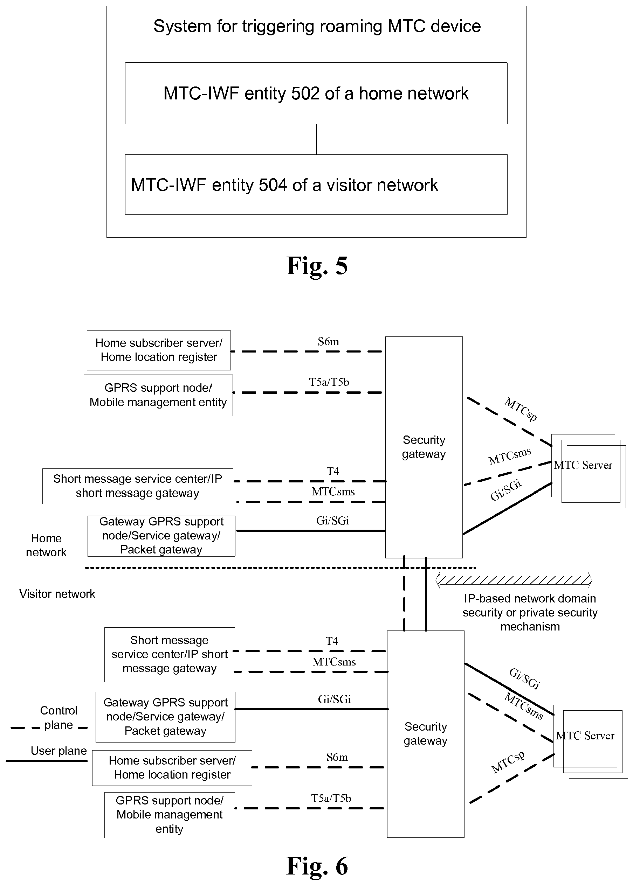

Fig. 5 is a block diagram showing a structure of a system for triggering a roaming MTC device according to an embodiment of the present invention. As shown in Fig. 5, the system for triggering the roaming MTC device includes: an MTC-IWF entity 502 of a home network and an MTC-IWF entity 504 of a visitor network, wherein the MTC-IWF entity 502 of the home network is configured to receive the registration information reported by the roaming MTC device, determine the MTC-IWF entity of the visitor network to which the MTC device is currently attached according to the registration information reported by the roaming MTC device when receiving a triggering request message for triggering the roaming MTC device from an MTC server 500 (not shown), and send the triggering request message to the MTC-IWF entity of the visitor network; and the MTC-IWF entity 504 of the visitor network communicates with the MTC-IWF entity 502 of the home network and is configured to receive the triggering request message and trigger the roaming MTC device.

In the embodiment, the MTC-IWF entity 502 of the home network receives the registration information reported by the roaming MTC device, and sends a triggering request message to the MTC-IWF entity 504 of the visitor network according to the registration information when receiving the triggering request message for triggering the roaming MTC device from the MTC server 500, and the MTC-IWF entity 504 of the visitor network sends the triggering request message to the roaming MTC device to trigger the roaming MTC device, so that the MTC-IWF entity of the home network determines the MTC-IWF entity of the visitor network to which the MTC device is currently attached according to the registration information after receiving the triggering request message and sends the triggering request message to the MTC-IWF entity of the visitor network, the triggering request message is prevented from being sent to the related nodes of the home network to be sent to the visitor network by the related nodes of the home network, and security is ensured in the process of the triggering the roaming MTC device; and moreover, the signalling traffic generated in the home network in the triggering process is reduced, and less resources of the home network are occupied, thereby improving the performance of the home network and promoting the improvement of the communication quality of the home network and the user experience.

In order to send the triggering request message to the MTC-IWF entity 504 of the visitor network accurately and smoothly, in the preferred embodiment, the MTC-IWF entity 502 of the home network may be further configured to receive the registration information reported by the roaming MTC device before sending the triggering request message to the MTC-IWF entity 504 of the visitor network, and create a routing relationship between itself and the MTC-IWF entity 504 of the visitor network according to the registration information reported by the roaming MTC device.

In the preferred embodiment, before the triggering request message is sent to the MTC-IWF entity 504 of the visitor network, the routing relationship between the MTC-IWF entity 502 of the home network and the MTC-IWF entity 504 of the visitor network is created at first according to the registration information; therefore, the triggering request message can be sent to the MTC-IWF entity 504 of the visitor network according to the created routing relationship, thereby ensuring the accuracy of sending the triggering request message to the MTC-IWF entity of the visitor network.

In order to ensure the communication security of the MTC-IWF entity, in the preferred embodiment, the MTC-IWF entity 502 of the home network may be further configured to perform security authentication with the MTC server 500 of the home network after receiving the triggering request message from the MTC server 500, and send the triggering request message to the MTC-IWF entity 504 of the visitor network according to the registration information after the security authentication is passed.

In the preferred embodiment, the MTC-IWF entity 502 of the home network performs security authentication with the MTC server 500 of the home network after receiving the triggering request message and sends the triggering request message to the MTC-IWF entity 504 of the visitor network according to the registration information after the MTC server 500 is authenticated and authorized, thereby ensuring the communication security of the MTC-IWF entity; and moreover, the network topology, relay or processing signalling protocol of a mobile communication system can be shielded.

In order to meet the application requirements of different scenarios, the registration information may include at least one of the following information: subscriber identity information of the roaming MTC device, identity information of the roaming MTC device, and network identity information of the visitor network, wherein the MTC-IWF entity 502 of the home network saves, maintains and manages the registration information. Specifically, the MTC-IWF entity 502 of the home network updates the saved registration information according to the registration information newly reported by the MTC device when the roaming MTC device roams to other visitor networks besides the visitor network, and deletes the saved registration information when the roaming MTC device is detached.

Several kinds of preferred information that the registration information may include are provided in the preferred embodiment above, so that the MTC-IWF entity of the home network can send the triggering request message to the MTC-IWF entity of the visitor network according to the registration information in different application scenarios, thereby meeting the application requirements in different scenarios and promoting the improvement of the success rate of sending the triggering request message to the MTC-IWF entity of the visitor network. In addition, the MTC-IWF entity 502 of the home network saves and maintains and updates the registration information in real time; when the roaming MTC device roams to other visitor networks besides the visitor network, the MTC-IWF entity 502 of the home network updates the saved registration information according to the registration information newly reported by the MTC device to ensure that the triggering request message can be accurately sent to the MTC-IWF entity of a new visitor network according to the latest registration information; and when the roaming MTC device is detached, the MTC-IWF entity 502 of the home network deletes the saved registration information to release its own storage resources in real time.

In order to ensure the security in the process of triggering the roaming MTC device and reduce the signaling traffic generated in the home network during the triggering, as shown in Fig. 6, the MTC-IWF entity 502 of the home network and the MTC-IWF entity 504 of the visitor network can be an MTC security gateway or an IWF entity with an MTC security gateway function, so as to ensure the security in the process of triggering the roaming MTC device. Moreover, different MTC security gateways are interconnected or different IWF entities with the MTC security gateway function are interconnected, so as to reduce the signalling traffic generated in the home network in the process of triggering the MTC device.

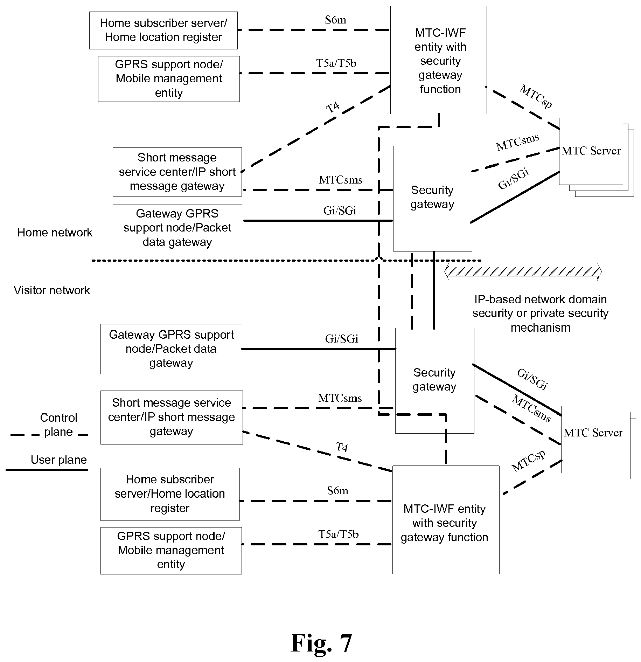

In order to ensure the security in the process of triggering the roaming MTC device and improve the efficiency of sending the triggering request message, as shown in Fig. 7, the MTC-IWF entity 502 of the home network and the MTC-IWF entity 504 of the visitor network can be the combination of an MTC security gateway and an IWF entity with the MTC security gateway function, wherein the MTC security gateway of the MTC-IWF entity 502 of the home network is interconnected with that of the MTC-IWF entity 504 of the visitor network, and the IWF entity with the MTC security gateway function of the MTC-IWF entity 502 of the home network is interconnected with that of the MTC-IWF entity 504 of the visitor network.

In the preferred embodiment, the MTC-IWF entity consists of an MTC security gateway and an IWF entity with an MTC security gateway function, so as to ensure the security in the process of triggering the roaming MTC device. Moreover, when a large number of MTC devices need triggering, the MTC server 500 can send a triggering request message to each of the MTC security gateway and the IWF entity with the MTC security gateway function; and different MTC security gateways are interconnected or different IWF entities with the MTC security gateway function are interconnected, so as to support the triggering of the roaming MTC device, improve the efficiency of sending the triggering request message, and promote the improvement of the efficiency of triggering the roaming MTC device. Preferably, the MTC server 500 can send a triggering request message to the MTC security gateway and the IWF entity with the MTC security gateway function in different forms respectively, namely, the triggering request messages sent to the MTC security gateway and the IWF entity with the MTC security gateway function can be in different formats. As shown in Fig. 7, the MTC server 500 can send the triggering request message to the MTC security gateway through MTCsms or Gi/SGi, and can send the triggering request message to the IWF entity with the MTC security gateway function through MTCsp.

Preferably, the MTC security gateway and the IWF entity with the MTC security gateway function can also be interconnected with each other as required.

Preferably, the IWF entity with the MTC security gateway function can also be an MTC security gateway.

Preferably, the MTC-IWF entity can receive a triggering request message for triggering a roaming MTC device or a triggering request message for triggering a non-roaming MTC device, so as to implement the data balance in the internet, effectively balance the network load and rationally balance the network resources. Preferably, the MTC security gateway and the IWF entity with the MTC security gateway function can save, maintain and manage the registration information of the roaming MTC device; when the roaming MTC device roams to other visitor networks besides the visitor network, the MTC-IWF entity 502 of the home network updates the stored registration information according to the registration information newly reported by the MTC device, so as to ensure that the triggering request message can be sent to the IWF entity of a new visitor network accurately according to the latest registration information; and when the roaming MTC device is detached, the MTC-IWF entity 502 of the home network deletes the saved registration information, so as to release its own storage resources in real time.

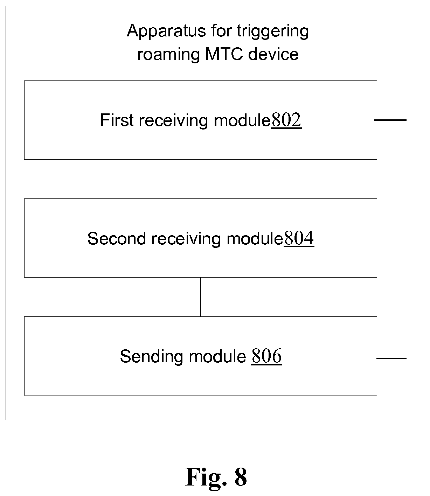

Fig. 8 is a block diagram showing a structure of an apparatus for triggering a roaming MTC device according to an embodiment of the present invention. As shown in Fig. 8, the apparatus for triggering the roaming MTC device includes: a first receiving module 802, configured to receive registration information reported by an MTC device which belongs to a first network (equivalent to a home network) and currently roams to a second network (equivalent to a visitor network), a second receiving module 804, configured to receive a triggering request message for triggering the MTC device from an MTC server, and a sending module 806, communicating with the first receiving module 802 and the second receiving module 804, and configured to send the triggering request message to the MTC-IWF entity of the second network according to the registration information when receiving the triggering request message for triggering the MTC device from the MTC server.

In the embodiment, after the first receiving module 802 receives the registration information reported by the MTC device which belongs to the first network and currently roams to the second network, the sending module 806 sends the triggering request message to the MTC-IWF entity of the second network according to the registration information when the second receiving module 804 receives the triggering request message for triggering the MTC device from the MTC server, and the MTC-IWF entity of the second network sends the triggering request message to the MTC device to trigger the MTC device, so that the MTC-IWF entity of the first network sends the triggering request message to the MTC-IWF entity of the second network according to the registration information after receiving the triggering request message, the triggering request message is prevented from being sent to the related nodes of the first network to be sent to the second network by the related nodes of the first network, and security is ensured in the process of the triggering the MTC device; and moreover, the signalling traffic generated in the first network in the triggering process is reduced, and less resources of the first network are occupied, thereby improving the performance of the first network and promoting the improvement of the communication quality of the first network and the user experience.

The apparatus for triggering the roaming MTC device in each preferred embodiment above can be applied to the IWF entity of the first network (equivalent to the home network).

In order to trigger the roaming MTC device, the embodiment provides an apparatus for triggering the roaming MTC device, which can be applied to the IWF entity of the second network (equivalent to the visitor network).

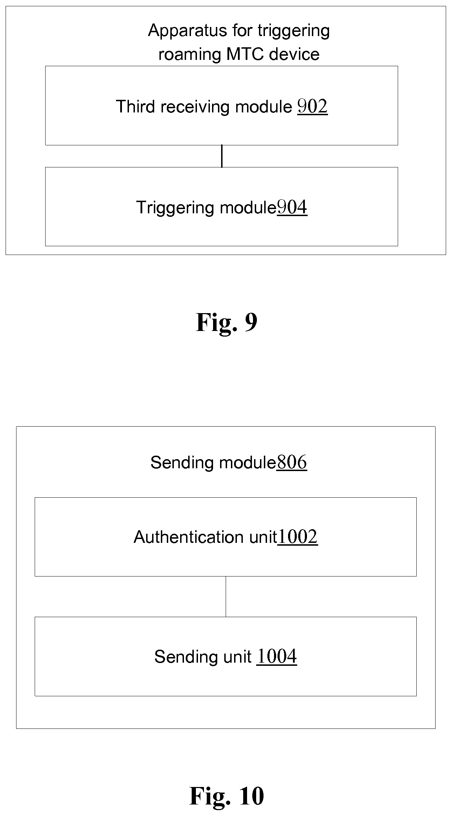

As shown in Fig. 9, the apparatus for triggering the roaming MTC device includes: a third receiving module 902, configured to receive a triggering request message from an IWF entity of a first network, wherein the triggering request message is used for triggering an MTC device which belongs to the first network and currently roams to the second network, and a triggering module 904, communicating with the third receiving module 902 and configured to trigger the MTC device roaming to the second network according to the triggering request message.

In the embodiment, when the MTC device in the first network (equivalent to the home network) roams to the second network (equivalent to the visitor network), the third receiving module 902 receives the triggering request message for triggering the MTC device from the IWF entity of the first network, and the triggering module 904 triggers the MTC device according to the triggering request message, so as to trigger the roaming MTC device.

Of course, when the first network or the second network is both a home network and a visitor network (since a network is relatively a home network or a visitor network), the two devices for triggering the roaming MTC device above (as shown in Figs. 8 and 9) can be applied to the IWF entity of the first network or the IWF entity of the second network at the same time.

In order to ensure the communication security, as shown in Fig. 10, preferably, the sending module 806 includes: an authentication unit 1002, configured to perform security authentication with the MTC server of the first network after receiving the triggering request message, and a sending unit 1004, communicating with the authentication unit 1002 and configured to send the triggering request message to the MTC-IWF entity of the second network according to the registration information after the security authentication is passed.

In the preferred embodiment, security authentication is performed with the MTC server of the home network after the triggering request message is received; and the triggering request message is sent to the MTC-IWF entity of the second network according to the registration information after the MTC server is authenticated and authorized, thereby ensuring the communication security; and moreover, the network topology, relay or processing signalling protocol of a mobile communication system can be shielded.

In order to meet the application requirements of different scenarios, the registration information may include at least one of the following information: subscriber identity information of the MTC device, identity information of the MTC device and network identity information of the second network.

In the preferred embodiment, several kinds of preferred information that the registration information may include are provided, so that the triggering request message can be sent to the MTC-IWF entity of the second network according to the registration information in different application scenarios, thereby meeting the application requirements of different scenarios, and promoting the increase of the success rate of sending the triggering request message to the MTC-IWF entity of the second network.

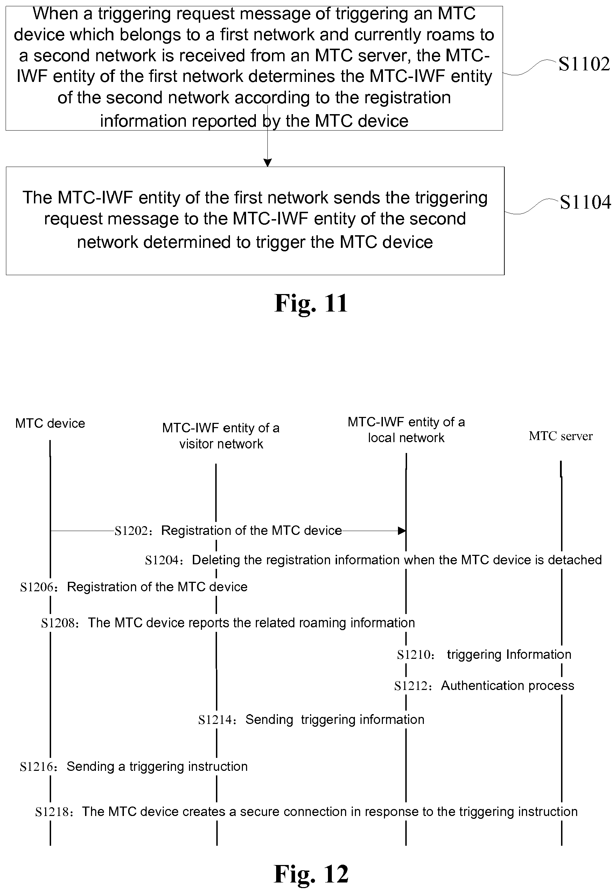

Fig. 11 is a flowchart of a method for triggering a roaming MTC device according to an embodiment of the present invention. As shown in Fig. 11, the method for triggering the roaming MTC device includes the following steps that:
Step 1102: When a triggering request message for triggering an MTC device which belongs to a first network and currently roams to a second network is received from an MTC server, the MTC-IWF entity of the first network determines the MTC-IWF entity of the second network according to the registration information reported by the MTC device.
Step 1104: The MTC-IWF entity of the first network sends the triggering request message to the MTC-IWF entity of the second network determined to trigger the MTC device.

In the embodiment, the MTC-IWF entity of the first network receives the registration information reported by the MTC device, determines the MTC-IWF entity of the second network according to the registration information when receiving a triggering request message for triggering the MTC device from an MTC server and sends the triggering request message to the MTC-IWF entity of the second network according to the registration information; and the MTC-IWF entity of the second network sends the triggering request message to the MTC device to trigger the MTC device, so that the MTC-IWF entity of the first network sends the triggering request message to the MTC-IWF entity of the second network according to the registration information, the triggering request message is prevented from being sent to the related nodes of the first network to be sent to the second network by the related nodes of the first network, and security is ensured in the process of the triggering the roaming MTC device; and moreover, the signalling traffic generated in the first network in the triggering process is reduced, and less resources of the first network are occupied, thereby improving the performance of the first network and promoting the improvement of the communication quality of the first network and the user experience.

In order to send the triggering request message to the MTC-IWF entity of the visitor network accurately and smoothly, in the preferred embodiment, before the MTC-IWF entity of the second network is determined according to the registration information reported by the MTC device, the method for triggering the roaming MTC device may further include the following steps that: when the MTC device is attached to the second network, the MTC-IWF entity of the first network receives the registration information from the MTC device and saves it; and the MTC-IWF entity of the first network creates a routing relationship between itself and the MTC-IWF entity of the second network according to the registration information.

In the preferred embodiment, before the triggering request message is sent to the MTC-IWF entity of the visitor network, the routing relationship between the MTC-IWF entity of the home network and the MTC-IWF entity of the visitor network is created at first according to the registration information; therefore, the triggering request message can be sent to the MTC-IWF entity of the visitor network according to the created routing relationship, thereby ensuring the accuracy of sending the triggering request message to the MTC-IWF entity of the visitor network.

In order to meet the application requirements of different scenarios, in the embodiment, triggering the MTC device includes the steps that: the MTC-IWF entity of the second network triggers the MTC device according to the triggering request message after receiving the triggering request message; or, the MTC-IWF entity of the second network sends the triggering request message to a predetermined network entity in the second network after receiving the triggering request message, and the predetermined network entity in the second network triggers the MTC device according to the triggering request message after receiving the triggering request message.

In the preferred embodiment, when the MTC device in the first network (equivalent to the home network) roams to the second network (equivalent to the visitor network), after receiving a triggering request message from the MTC-IWF entity of the first network, the MTC-IWF entity of the second network can directly trigger the MTC device according to the triggering request message or send the triggering request message to a predetermined network entity in the second network (such as the related nodes in the second network), and the predetermined network entity in the second network triggers the MTC device according to the triggering request message, so as to meet the application requirements of different scenarios.

In order to ensure the communication security of the MTC-IWF entity, in the preferred embodiment, the step that the MTC-IWF entity of the first network sends the triggering request message to the MTC-IWF entity of the second network determined includes that: after receiving the triggering request message for triggering the MTC device from the MTC server, the MTC-IWF entity of the first network performs security authentication with the MTC server of the first network; and after the security authentication is passed, the MTC-IWF entity of the first network sends the triggering request message to the MTC-IWF entity of the second network according to the registration information.

In the preferred embodiment, after receiving the triggering request message, the MTC-IWF entity of the first network performs security authentication with the MTC server of the first network, and sends the triggering request message to the MTC-IWF entity of the second network according to the registration information after the MTC server is authenticated and authorized, thereby ensuring the communication security of the MTC-IWF entity; and moreover, the network topology, relay or processing signalling protocol of a mobile communication system can be shielded.

In order to meet the application requirements of different scenarios, the registration information includes at least one of the following information: subscriber identity information of the MTC device, identity information of the MTC device, and network identity information of the second network, wherein the MTC-IWF entity of the first network saves, maintains and manages the registration information. Specifically, the MTC-IWF entity of the first network updates the saved registration information according to the registration information newly reported by the MTC device when the MTC device roams to other visitor networks besides the second network, and deletes the saved registration information of the MTC device when the MTC device is detached.

In the preferred embodiments, several kinds of preferred information that the registration information may include are provided, so that the MTC-IWF entity of the first network can send the triggering request message to the MTC-IWF entity of the second network according to the registration information in different application scenarios, so as to meet the application requirements in different scenarios and promote the increase of success rate of sending the triggering request message to the MTC-IWF entity of the second network. In addition, the MTC-IWF entity of the home network saves and maintains and updates the registration information in real time; when the roaming MTC device roams to other visitor networks besides the visitor network, the MTC-IWF entity of the home network updates the saved registration information according to the registration information newly reported by the MTC device to ensure that the triggering request message can be sent to the IWF entity of a new visitor network accurately according to the latest registration information; and when the roaming MTC device is detached, the MTC-IWF entity of the home network deletes the saved registration information to release its own storage resources in real time.

In order to ensure the security in the process of triggering the roaming MTC device and reduce the signaling traffic generated in the home network during the triggering, as shown in Fig. 6, the MTC-IWF entity of the first network and the MTC-IWF entity of the visitor network can be implemented by an MTC security gateway or an IWF entity with an MTC security gateway function, so as to ensure the security in the process of triggering the roaming MTC device. Moreover, different MTC security gateways are interconnected or different IWF entities with the MTC security gateway function are interconnected, so as to reduce the signalling traffic generated in the home network in the process of triggering the MTC device.

In order to ensure the security in the process of triggering the roaming MTC device and improve the efficiency of sending the triggering request message, as shown in Fig. 7, the MTC-IWF entity of the first network and the MTC-IWF entity of the visitor network can be implemented by the combination of an MTC security gateway and an IWF entity with an MTC security gateway function, wherein the MTC security gateway of the MTC-IWF entity of the first network is interconnected with that of the MTC-IWF entity of the second network, and the IWF entity with the MTC security gateway function of the MTC-IWF entity of the first network is interconnected with that of the MTC-IWF entity of the second network.

In the preferred embodiment, the MTC-IWF entity consists of an MTC security gateway and an IWF entity with an MTC security gateway function, so as to ensure the security in the process of triggering the MTC device. Moreover, when a large number of MTC devices need triggering, the MTC server can send a triggering request message to the MTC security gateway and the IWF entity with the MTC security gateway function, so that different MTC security gateways are interconnected and different IWF entities with the MTC security gateway function are interconnected, so as to support the triggering of the roaming MTC device, improve the efficiency of sending the triggering request message, and promote the increase of efficiency of triggering the MTC device. Preferably, the MTC server can send a triggering request message to the MTC security gateway and the IWF entity with the MTC security gateway function in different message forms respectively, namely, the triggering request messages sent to the MTC security gateway and the IWF entity with the MTC security gateway function can be in different formats. As shown in Fig. 7, the triggering request message can be sent to the MTC security gateway through MTCsms or Gi/SGi, or sent to the IWF entity with the MTC security gateway function through MTCsp.

Preferably, the MTC security gateway and the IWF entity with the MTC security gateway function can also be interconnected as required.

Preferably, the IWF entity with the MTC security gateway function can also be an MTC security gateway.

Preferably, the MTC-IWF entity can receive a triggering request message for triggering a roaming MTC device or a triggering request message for triggering a non-roaming MTC device, so as to implement the data balance in the internet, effectively balance the network load and rationally balance the network resources.

Preferably, the MTC security gateway and the IWF entity with the MTC security gateway function can save, maintain and manage the registration information of the roaming MTC device; when the roaming MTC device roams to other visitor networks besides the visitor network, the MTC-IWF entity of the home network updates the stored registration information according to the registration information newly reported by the MTC device, so as to ensure that the triggering request message can be sent to the IWF entity of a new visitor network accurately according to the latest registration information; and when the roaming MTC device is detached, the MTC-IWF entity of the home network deletes the saved registration information, so as to release its own storage resources in real time.

The preferred embodiments above are described below with combination with a specific example in detail.

Fig. 12 is a flowchart of a method for triggering a roaming MTC device according to an example of the present invention. As shown in Fig. 12, the method for triggering the roaming MTC device includes the following steps that:
Step 1202: When being attached to a home network (equivalent to a first network), an MTC device needs to be further registered in the MTC-IWF entity of the home network, wherein the registration information includes the subscriber identity information of the MTC device and the identity information of the MTC device. It should be noted that the registration information may further include the network identity information of the home network.
Step 1204: When the MTC device is detached and roams, the MTC-IWF entity of the home network deletes the registration information of the MTC device.
Step 1206: After being attached to a visitor network (equivalent to a second network), the MTC device is further registered to the MTC-IWF entity of the visitor network, wherein the registration information includes the subscriber identity information of the MTC device, the identity information of the MTC device, and the network identity information of the visitor network to which the MTC device is currently attached.
Step 1208: The MTC device reports registration information (equivalent to related roaming information) to the MTC-IWF entity of the home network.
Step 1210: When needing to trigger the MTC device, the MTC server sends a triggering request message to the MTC-IWF entity of the home network at first, wherein the triggering request message at least contains the identity information of the MTC device or the subscriber identity information of the MTC device.
Step 1212: The MTC-IWF entity of the home network performs security authentication with the MTC server.
Step 1214: After the security authentication is passed, the MTC-IWF entity of the home network sends the triggering request message to the MTC-IWF entity of the visitor network according to the identity information of the MTC device or the subscriber identity information of the MTC device in the triggering request message, and the registration information saved by the MTC-IWF entity of the home network, wherein the security of connection between the MTC-IWF entity of the home network and the MTC-IWF entity of the visitor network is ensured by the security of a 3GPP core network.
Step 1216: After receiving the triggering request message, the MTC-IWF entity of the visitor network generates a triggering instruction message for the triggering request message and sends the triggering instruction message to the MTC device, wherein the triggering instruction message needs security protection, such as integrity protection.

After receiving the triggering request message, the MTC-IWF entity of the visitor network can also send the triggering request message to other nodes in the 3GPP core network, such as a Gateway General Packet Radio Service Support node (GGSN)/Packet Data Network Gateway (P-GW), a Serving GPRS Support node (SGSN)/a Mobile Management Entity (MME), and a Short Message Service-Service Center (SMS-SC)/lnternet Protocol Short Message Gateway (IP-SM-GW); and these nodes generate a triggering instruction message for the triggering request message and send the triggering instruction message to the MTC device, wherein the triggering instruction message needs security protection, such as integrity protection.

Step 1218: After receiving the triggering instruction message, the MTC device starts a secure connection creation process with the MTC server in response to the triggering instruction message.

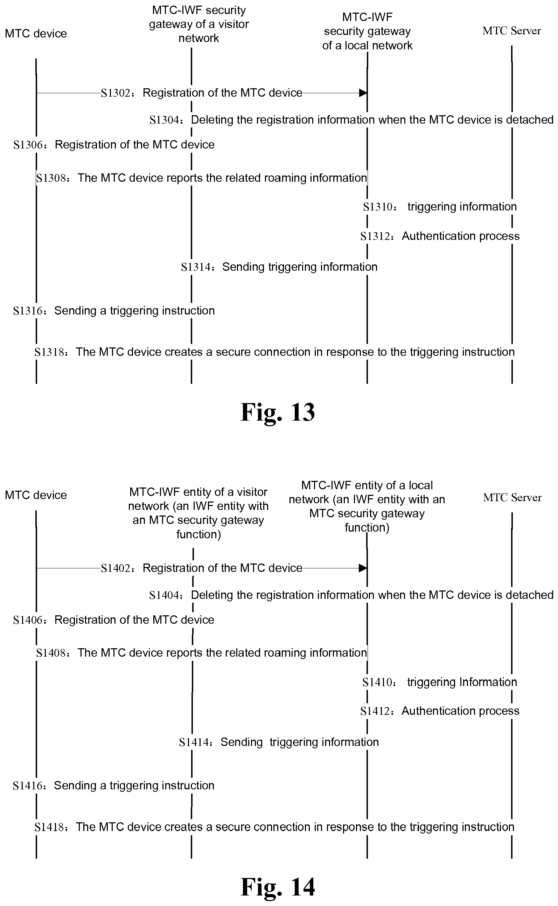

Fig. 13 is another flowchart of a method for triggering a roaming MTC device according to an example of the present invention. As shown in Fig. 13, the method for triggering the roaming MTC device includes the following steps that:
Step 1302: When being attached to a home network, an MTC device needs to be further registered in the MTC security gateway in the home network (the MTC-IWF entity of the home network is the MTC security gateway), wherein the registration information includes the subscriber identity information of the MTC device and the identity information of the MTC device. The registration information may further include the network identity information of the home network if necessary.
Step 1304: When the MTC device is detached and roams, the MTC security gateway of the home network deletes the registration information of the MTC device.
Step 1306: After being attached to a visitor network, the MTC device is further registered to the MTC security gateway in the visitor network (the MTC-IWF entity of the visitor network is the MTC security gateway), wherein the registration information includes the subscriber identity information of the MTC device, the identity information of the MTC device, and the network identity information of the visitor network to which the MTC is currently attached.
Step 1308: The MTC device reports registration information (equivalent to related roaming information) to the MTC-IWF entity of the home network.
Step 1310: When needing to trigger the MTC device, the MTC server sends a triggering request message to the MTC security gateway of the home network at first, wherein the triggering request message at least contains the identity information of the MTC device or the subscriber identity information of the MTC device.
Step 1312: The MTC security gateway of the home network performs security authentication with the MTC server.
Step 1314: After the security authentication is passed, the MTC security gateway of the home network sends the triggering request message to the MTC security gateway of the visitor network according to the identity information of the MTC device or the subscriber identity information of the MTC device in the triggering request message, and the registration information saved by the MTC security gateway of the home network; and the security of connection between the MTC security gateway of the home network and the MTC security gateway of the visitor network is ensured by the security of a 3GPP core network.
Step 1316: After receiving the triggering request message, the MTC security gateway of the visitor network generates a triggering instruction message for the triggering request message and sends the triggering instruction message to the MTC device, wherein the triggering instruction message needs security protection, such as integrity protection.

After receiving the triggering request message, the MTC security gateway of the visitor network can also send the triggering request message to other nodes in the 3GPP core network, such as GGSN/PGW, SGSN/MME and SMS-SC/IP-SM-GW; and these nodes generate a triggering instruction message for the triggering request message and send the triggering instruction message to the MTC device, wherein the triggering instruction message needs security protection, such as integrity protection.

Step 1318: After receiving the triggering instruction message, the MTC device starts a secure connection creation process with the MTC server in response to the triggering instruction message.

Fig. 14 is another flowchart of a method for triggering a roaming MTC device according to an example of the present invention. As shown in Fig. 14, the method for triggering the roaming MTC device includes the following steps that:
Step 1402: When being attached to a home network, the MTC device needs to be further registered in an IWF entity with an MTC security gateway function in the home network, wherein the registration information includes the subscriber identity information of the MTC device and the identity information of the MTC device. The registration information may further include the network identity information of the home network if necessary.
Step 1404: When the MTC device is detached and roams, the IWF entity with the MTC security gateway function in the home network deletes the registration information of the MTC device.
Step 1406: After being attached to a visitor network, the MTC device is further registered to the IWF entity with the MTC security gateway function in the visitor network, wherein the registration information includes the subscriber identity information of the MTC device, the identity information of the MTC device, and the network identity information of the visitor network to which the MTC is currently attached.
Step 1408: The MTC device reports registration information (equivalent to related roaming information) to the MTC-IWF entity of the home network.
Step 1410: When needing to trigger the MTC device, the MTC server sends a triggering request message to the IWF entity with the MTC security gateway function in the home network at first, wherein the triggering request message at least contains the identity information of the MTC device or the subscriber identity information of the MTC device.
Step 1412: The IWF entity with the MTC security gateway function in the home network performs security authentication with the MTC server.
Step 1414: After the security authentication is passed, the IWF entity with the MTC security gateway function sends a triggering request message to the IWF entity with the MTC security gateway function in the visitor network according to the identity information of the MTC device or the subscriber identity information of the MTC device in the triggering request message, and the registration information saved by the IWF entity with the MTC security gateway function in the home network, wherein the security of connection between the IWF entity with the MTC security gateway function in the home network and the IWF entity with the MTC security gateway function in the visitor network is ensured by the security of a 3GPP core network.
Step 1416: After receiving the triggering request message, the IWF entity with the MTC security gateway function in the visitor network generates a triggering instruction message for the triggering request message and sends the triggering instruction message to the MTC device, wherein the triggering instruction message needs security protection, such as integrity protection.
Step 1418: After receiving the triggering request message, the IWF entity with the MTC security gateway function in the visitor network can also send the triggering request message to other nodes in the 3GPP core network, such as GGSN/PGW, SGSN/MME and SMS-SC/IP-SM-GW; and these nodes generate a triggering instruction message for the triggering request message and send the triggering instruction message to the MTC device, wherein the triggering instruction message needs security protection, such as integrity protection. Step 1418: After receiving the triggering instruction message, the MTC device starts a secure connection creation process with the MTC server in response to the triggering instruction message.

In the embodiments, the MTC device refers to a machine-to-MTC device in the mobile communication network; a Universal Integrated Circuit Card (UICC) is installed in the MTC device; and a user identity module, such as a Subscriber Identity Module (SIM), a Universal Subscriber Identity Module (USIM), an Internet Protocol Multimedia Service Identity Module (ISIM) and the like are located in the UICC.

The MTC server is configured to provide related MTC service or business. GGSN/PGW, a Home Location Register (HLR)/a Home Subscriber Server (HSS), an SGSN/MME and an SMS-SC/IP-SM-GW.

Obviously, those skilled in the art shall understand that the modules or steps of the present invention may be implemented by general computing apparatus and centralized in a single computing apparatus or distributed in a network consisting of multiple computing apparatus. Optionally, the modules or steps may be implemented by program codes executable by the computing apparatus, so that they may be stored in a storage apparatus and executed by the computing apparatus, and, in some cases, the steps can be executed in a sequence different from the illustrated or described sequence, or they are respectively made into the integrated circuit modules or many of them are made into a single integrated circuit module. By doing so, the present invention is not limited to any specific combination of hardware and software.

The above are only the preferred embodiments of the present invention and not intended to limit the present invention. For those skilled in the art, various modifications and changes can be made in the present invention.

## Claims

1. A system for triggering a roaming Machine Type Communication (MTC) device, comprising: an MTC InterWorking Function (MTC-IWF) entity of a home network (502), and an MTC IWF entity of a visitor network (504), wherein
the MTC-IWF entity of the home network (502) is configured to receive registration information reported by the roaming MTC device, determine the MTC-IWF entity of the visitor network (504) to which the MTC is currently attached according to the registration information reported by the roaming MTC device when receiving the triggering request message for triggering the roaming MTC device from an MTC server, and send the triggering request message to the MTC-IWF entity of the visitor network (504); and
the MTC-IWF entity of the visitor network is configured to receive the triggering request message and trigger the roaming MTC device.

2. The system according to claim 1, wherein
the MTC-IWF entity of the home network (502) may be further configured to receive the registration information reported by the roaming MTC device before sending the triggering request message to the MTC-IWF entity of the visitor network (504), and create a routing relationship between the MTC-IWF entity of the home network (502) and the MTC-IWF entity of the visitor network (504) according to the registration information reported by the roaming MTC device.

3. The system according to claim 1 or 2, wherein
the MTC-IWF entity of the home network (502) may be further configured to perform security authentication with the MTC server of the home network after receiving the triggering request message from the MTC server, and send the triggering request message to the MTC-IWF entity of the visitor network (504) according to the registration information after the security authentication is passed.

4. The system according to claim 1 or 2, wherein the registration information comprises at least one of the following: subscriber identity information of the roaming MTC device, identity information of the roaming MTC device, and network identity information of the visitor network; wherein the MTC-IWF entity of the home network (502) saves, maintains and manages the registration information; and the MTC-IWF entity of the home network (502) updates the saved registration information according to the registration information newly reported by the MTC device when the roaming MTC device roams to other visitor networks besides the visitor network and deletes the saved registration information when the roaming MTC device is detached.

5. The system according to claim 1 or 2, wherein the MTC-IWF entity is one of the following:
an MTC security gateway,
an IWF entity with an MTC security gateway function, and
a combination of the MTC security gateway and the IWF entity with an MTC security gateway function; wherein the MTC security gateway included by the MTC-IWF entity in the home network is interconnected with the MTC security gateway included by the MTC-IWF entity in the visitor network; and the IWF entity with an MTC security gateway function included by the MTC-IWF entity in the home network is interconnected with the IWF entity with an MTC security gateway function included by the MTC-IWF entity in the visitor network.

6. An apparatus for triggering a roaming Machine Type Communication (MTC) device, comprising:
a first receiving module (802), configured to receive registration information reported by an MTC device which belongs to a first network and currently roams to a second network;
a second receiving module (804), configured to receive a triggering request message for triggering the MTC device from an MTC server; and
wherein the apparatus is configured to determine the MTC-IWF entity of the visitor network (504) to which the MTC is currently attached according to the registration information;
a sending module (806), configured to send the triggering request message to the MTC-IWF entity of the second network according to the registration information when receiving the triggering request message for triggering the MTC device from the MTC server.

7. The apparatus for triggering the roaming MTC device according to claim 6, wherein the sending module comprises:
an authentication unit (1002), configured to perform security authentication with the MTC server of the first network after receiving the triggering request message; and
a sending unit (1004), configured to send the triggering request message to the MTC-IWF entity of the second network according to the registration information after the security authentication is passed.

8. The apparatus for triggering the roaming MTC device according to claim 6 or 7, wherein the registration information comprises at least one of the following: subscriber identity information of the MTC device, identity information of the MTC device and network identity information of the second network.

9. A method for triggering a roaming MTC device, comprising:
when a triggering request message for triggering an MTC device which belongs to a first network and currently roams to a second network is received from an MTC server, determining, by an MTC-IWF entity of the first network, an MTC-IWF entity of the second network according to the registration information reported by the MTC device (S1102); and
sending, by the MTC-IWF entity of the first network, the triggering request message to the MTC-IWF entity of the second network determined to trigger the MTC device (S1104).

10. The method according to claim 9, wherein before the MTC-IWF entity of the second network is determined according to the registration information reported by the MTC device, the method further comprises:
when the MTC device is attached to the second network, the MTC-IWF entity of the first network receiving and saving the registration information from the MTC device; and
creating, by the MTC-IWF entity of the first network, a routing relationship between the MTC-IWF entity of the first network and the MTC-IWF entity of the second network according to the registration information.

11. The method according to claim 9, wherein triggering the MTC device comprises:
triggering, by the MTC-IWF entity of the second network, the MTC device according to the triggering request message after the triggering request message is received; or,
sending, by the MTC-IWF entity of the second network, the triggering request message to a predetermined network entity in the second network after the triggering request message is received, and triggering, by the predetermined network entity in the second network, the MTC device according to the triggering request message after the triggering request message is received.

12. The method for triggering a roaming MTC device according to claim 9, wherein sending, by the MTC-IWF entity of the first network, the triggering request message to the MTC-IWF entity of the second network determined comprises:
performing, by the MTC-IWF entity of the first network, security authentication with the MTC server of the first network after the triggering request message for triggering the MTC device is received from the MTC server; and
after the security authentication is passed, sending, by the MTC-IWF entity of the first network, the triggering request message to the MTC-IWF entity of the second network according to the registration information.

13. The method for triggering a roaming MTC device according to any one of claims 9 to 12, wherein the registration information comprises at least one of the following: subscriber identity information of the MTC device, identity information of the MTC device, and network identity information of the second network; wherein the MTC-IWF entity of the first network saves, maintains and manages the registration information; and the MTC-IWF entity of the first network updates the saved registration information according to the registration information newly reported by the MTC device when the MTC device roams to other visitor networks besides the visitor network and deletes the saved registration information of the MTC device when the MTC device is detached.

14. The method for triggering a roaming MTC device according to any one of claims 9 to 12, wherein the MTC-IWF entity is one of the following:
an MTC security gateway,
an IWF entity with an MTC security gateway function, and
a combination of the MTC security gateway and the IWF entity with an MTC security gateway function; wherein the MTC security gateway included by the MTC-IWF entity in the first network is interconnected with the MTC security gateway included by the MTC-IWF entity in the second network; and the IWF entity with an MTC security gateway function included by the MTC-IWF entity in the first network is interconnected with an MTC security gateway function included by the MTC-IWF entity in the second network.

## Patentansprüche

1. System zum Auslösen einer Roaming-MTC- (Machine Type Communication) Vorrichtung umfassend: ein MTC-InterWorking-Function- (MTC-IWF) Element eines Heimatnetzwerks (502) und ein MTC-IWF-Element eines Besuchernetzwerks (504), wobei
das MTC-IWF-Element des Heimatnetzwerks (502) konfiguriert ist, um Registrierungsinformationen zu empfangen, die der Roaming-MTC-Vorrichtung gemeldet werden, das MTC-IWF-Element des Besuchernetzwerks (504), an die die MTC gegenwärtig angeschlossen ist, gemäß den von der Roaming-MTC-Vorrichtung gemeldeten Registrierungsinformationen zu bestimmen, wenn die Auslöseanforderungsnachricht zum Auslösen der Roaming-MTC-Vorrichtung von einem MTC-Server empfangen wird, und die Auslöseanforderungsnachricht an das MTC-IWF-Element des Besuchernetzwerks (504) zu senden; und
das MTC-IWF-Element des Besuchernetzwerks konfiguriert ist, um die Auslöseanforderungsnachricht zu empfangen und die Roaming-MTC-Vorrichtung auszulösen.

2. System nach Anspruch 1, wobei
das MTC-IWF-Element des Heimatnetzwerks (502) ferner konfiguriert sein kann, um die von der Roaming-MTC-Vorrichtung gemeldeten Registrierungsinformationen vor dem Senden der Auslöseanforderungsnachricht an das MTC-IWF-Element des Besuchernetzwerks (504) zu empfangen und eine Routing-Beziehung zwischen dem MTC-IWF-Element des Heimatnetzwerks (502) und dem MTC-IWF-Element des Besuchernetzwerks (504) gemäß den von der Roaming-MTC-Vorrichtung gemeldeten Registrierungsinformationen zu erstellen.

3. System nach Anspruch 1 oder 2, wobei
das MTC-IWF-Element des Heimatnetzwerks (502) ferner konfiguriert sein kann, um nach dem Empfangen der Auslöseanforderungsnachricht von dem MTC-Server Sicherheitsauthentifizierung bei dem MTC-Server des Heimatnetzwerks durchzuführen und die Auslöseanforderungsnachricht nach erfolgreicher Sicherheitsauthentifizierung gemäß den Registrierungsinformationen an das MTC-IWF-Element des Besuchernetzwerks (504) zu senden.

4. System nach Anspruch 1 oder 2, wobei die Registrierungsinformationen mindestens eine der Folgenden umfassen: Teilnehmeridentitätsinformationen des Roaming-MTC-Vorrichtung und Netzwerkidentitätsinformationen des Besuchernetzwerks; wobei das MTC-IWF-Element des Heimatnetzwerks (502) die Registrierungsinformationen speichert, pflegt und verwaltet; und das MTC-IWF-Element des Heimatnetzwerks (502) die gespeicherten Registrierungsinformationen gemäß den Registrierungsinformationen aktualisiert, die von der Roaming-MTC-Vorrichtung neu gemeldet werden, wenn die Roaming-MTC-Vorrichtung zu anderen Besuchernetzwerken als dem Besuchernetzwerk roamt, und die gespeicherten Registrierungsinformationen löscht, wenn die Roaming-MTC-Vorrichtung getrennt wird.

5. System nach Anspruch 1 oder 2, wobei das MTC-IWF-Element eines von Folgenden ist:
ein MTC-Sicherheitsgateway,
ein IWF-Element mit MTC-Sicherheitsgateway-Funktion und
eine Kombination des MTC-Sicherheitsgateways und des IWF-Elements mit MTC-Sicherheitsgateway-Funktion; wobei das von dem MTC-IWF-Element im Heimatnetzwerk umfasste MTC-Sicherheitsgateway mit dem von dem MTC-IWF-Element im Besuchernetzwerk umfassten MTC-Sicherheitsgateway verbunden ist; und das von dem MTC-IWF-Element im Heimatnetzwerk umfasste IWF-Element mit MTC-Sicherheitsgateway-Funktion mit dem von der MTC-IWF-Element im Besuchernetzwerk umfassten IWF-Element mit MTC-Sicherheitsgateway-Funktion verbunden ist.

6. Vorrichtung zum Auslösen einer Roaming-MTC- (Machine Type Communication) Vorrichtung umfassend:
ein erstes Empfangsmodul (802), das konfiguriert ist, um Registrierungsinformationen zu empfangen, die von einer MTC-Vorrichtung gemeldet werden, die zu einem ersten Netzwerk gehört und gegenwärtig zu einem zweiten Netzwerk roamt;
ein zweites Empfangsmodul (804), das konfiguriert ist, um eine Auslöseanforderungsnachricht zum Auslösen der MTC-Vorrichtung von einem MTC-Server zu empfangen; und
wobei die Vorrichtung so konfiguriert ist, dass sie das MTC-IWF-Element des Besuchernetzwerks (504), an das die MTC gegenwärtig angeschlossen ist, gemäß den Registrierungsinformationen bestimmt;
ein Sendemodul (806), das konfiguriert ist, um die Auslöseanforderungsnachricht gemäß den Registrierungsinformationen an das MTC-IWF-Element des zweiten Netzwerks zu senden, wenn die Auslöseanforderungsnachricht zum Auslösen der MTC-Vorrichtung von dem MTC-Server empfangen wird.

7. Vorrichtung zum Auslösen der Roaming-MTC-Vorrichtung nach Anspruch 6, wobei das Sendemodul umfasst:
eine Authentifizierungseinheit (1002), die konfiguriert ist, um nach dem Empfangen der Auslöseanforderungsnachricht Sicherheitsauthentifizierung bei dem MTC-Server des ersten Netzwerks durchzuführen; und
eine Sendeeinheit (1004), die konfiguriert ist, um die Auslöseanforderungsnachricht nach erfolgreicher Sicherheitsauthentifizierung gemäß den Registrierungsinformationen an das MTC-IWF-Element des zweiten Netzwerks zu senden.

8. Vorrichtung zum Auslösen der Roaming-MTC-Vorrichtung nach Anspruch 6 oder 7, wobei die Registrierungsinformationen mindestens eine de Folgenden umfassen: Teilnehmeridentitätsinformationen der MTC-Vorrichtung, Identitätsinformationen der MTC-Vorrichtung und Netzwerkidentitätsinformationen des zweiten Netzwerks.

9. Verfahren zum Auslösen einer Roaming-MTC-Vorrichtung, umfassend:
Bestimmen, durch ein MTC-IWF-Element des ersten Netzwerks bei Empfang einer Auslöseanforderungsnachricht von einem MTC-Server zum Auslösen einer MTC-Vorrichtung, die zu einem ersten Netzwerk gehört und gegenwärtig zu einem zweiten Netzwerk roamt, eines MTC-IWF-Elements des zweiten Netzwerks gemäß den Registrierungsinformationen, die von der MTC-Vorrichtung gemeldet werden (S1102); und
Senden der Auslöseanforderungsnachricht durch das MTC-IWF-Element des ersten Netzwerks an die zum Auslösen des MTC-Geräts bestimmte MTC-IWF-Entität des zweiten Netzwerks (S1104).

10. Verfahren nach Anspruch 9, wobei das Verfahren vor dem Bestimmen des MTC-IWF-Elements des zweiten Netzwerks gemäß den von der MTC-Vorrichtung gemeldeten Registrierungsinformationen ferner umfasst:
Empfangen und Speichern der Registrierungsinformationen von der MTC-Vorrichtung durch das MTC-IWF-Element des ersten Netzwerks, wenn die MTC-Vorrichtung an das zweite Netzwerk angeschlossen ist; und
Erstellen, durch das MTC-IWF-Element des ersten Netzwerks, einer Routing-Beziehung zwischen dem MTC-IWF-Elements des ersten Netzwerks und des MTC-IWF-Elements des zweiten Netzwerks gemäß den Registrierungsinformationen.

11. Verfahren nach Anspruch 9, wobei das Auslösen der MTC-Vorrichtung umfasst:
Auslösen der MTC-Vorrichtung durch das MTC-IWF-Element des zweiten Netzwerks gemäß der Auslöseanforderungsnachricht nach dem Empfangen der Auslöseanforderungsnachricht; oder
Senden der Auslöseanforderungsnachricht durch das MTC-IWF-Element des zweiten Netzwerks an eine vorbestimmte Netzwerkentität in dem zweiten Netzwerk nach dem Empfangen der Auslöseanforderungsnachricht und Auslösen der MTC-Vorrichtung durch das vorab festgelegte Netzwerkelement in dem zweiten Netzwerk gemäß der Auslöseanforderungsnachricht nach dem Empfangen der Auslöseanforderungsnachricht.

12. Verfahren zum Auslösen einer Roaming-MTC-Vorrichtung nach Anspruch 9, wobei das Senden der Auslöseanforderungsnachricht durch das MTC-IWF-Element des ersten Netzwerks an das bestimmte MTC-IWF-Element des zweiten Netzwerks umfasst:
Durchführen von Sicherheitsauthentifizierung durch das MTC-IWF-Element des ersten Netzwerks beim MTC-Server des ersten Netzwerks nach dem Empfangen der Auslöseanforderungsnachricht von dem MTC-Server zum Auslösen der MTC-Vorrichtung; und
Senden der Auslöseanforderungsnachricht durch das MTC-IWF-Element des ersten Netzwerks nach erfolgreicher Sicherheitsauthentifizierung an das MTC-IWF-Element des zweiten Netzwerks gemäß den Registrierungsinformationen.

13. Verfahren zum Auslösen einer Roaming-MTC-Vorrichtung nach einem beliebigen der Ansprüche 9 bis 12, wobei die Registrierungsinformationen mindestens eine der Folgenden umfassen: Teilnehmeridentitätsinformationen der MTC-Vorrichtung, Identitätsinformationen der MTC-Vorrichtung und Netzwerkidentitätsinformationen des zweiten Netzwerks; wobei das MTC-IWF-Element des ersten Netzwerks die Registrierungsinformationen speichert, pflegt und verwaltet; und das MTC-IWF-Element des ersten Netzwerks die gespeicherten Registrierungsinformationen gemäß den Registrierungsinformationen aktualisiert, die von der MTC-Vorrichtung neu gemeldet werden, wenn die MTC-Vorrichtung zu anderen Besuchernetzwerken als dem Besuchernetzwerk roamt, und die gespeicherten Registrierungsinformationen der MTC-Vorrichtung löscht, wenn die MTC-Vorrichtung getrennt wird.

14. Verfahren zum Auslösen einer Roaming-MTC-Vorrichtung nach einem beliebigen der Ansprüche 9 bis 12, wobei das MTC-IWF-Element eines von Folgenden ist:
ein MTC-Sicherheitsgateway,
ein IWF-Element mit MTC-Sicherheitsgateway-Funktion und
eine Kombination des MTC-Sicherheitsgateways und des IWF-Elements mit MTC-Sicherheitsgateway-Funktion; wobei das von dem MTC-IWF-Element in dem ersten Netzwerk umfasste MTC-Sicherheitsgateway mit dem von dem MTC-IWF-Element im zweiten Netzwerk umfassten MTC-Sicherheitsgateway verbunden ist; und das von dem MTC-IWF-Element in dem ersten Netzwerk umfasste IWF-Element mit MTC-Sicherheitsgateway-Funktion mit einer von dem MTC-IWF-Element in dem zweiten Netzwerk umfassten MTC-Sicherheitsgateway-Funktion verbunden ist.

## Revendications

1. Système pour activer un dispositif de communication de type machine (MTC) en itinérance, comprenant : une entité à fonction d'inter-fonctionnement MTC (MTC-IWF) d'un réseau domestique (502) et une entité IWF MTC d'un réseau visiteur (504), dans lequel
l'entité MTC-IWF du réseau domestique (502) est configurée pour recevoir des informations d'enregistrement rapportées par le dispositif MTC en itinérance, déterminer l'entité MTC-IWF du réseau visiteur (504) auquel le MTC est actuellement associé, en fonction des informations d'enregistrement rapportées par le dispositif MTC en itinérance lors de la réception du message de demande d'activation pour activer le dispositif MTC en itinérance depuis un serveur MTC et envoyer le message de demande d'activation à l'entité MTC-IWF du réseau visiteur (504) ; et
l'entité MTC-IWF du réseau visiteur est configurée pour recevoir le message de demande d'activation et pour activer le dispositif MTC en itinérance.

2. Système selon la revendication 1, dans lequel
l'entité MTC-IWF du réseau domestique (502) peut en outre être configurée pour recevoir les informations d'enregistrement rapportées par le dispositif MTC en itinérance avant d'envoyer le message de demande d'activation à l'entité MTC-IWF du réseau visiteur (504) et créer une relation de routage entre l'entité MTC-IWF du réseau domestique (502) et l'entité MTC-IWF du réseau visiteur (504) en fonction des informations d'enregistrement rapportées par le dispositif MTC en itinérance.

3. Système selon la revendication 1 ou 2, dans lequel
l'entité MTC-IWF du réseau domestique (502) peut en outre être configurée pour effectuer une authentification de sécurité avec le serveur MTC du réseau domestique après avoir reçu le message de demande d'activation du serveur MTC et envoyer le message de demande d'activation à l'entité MTC-IWF du réseau visiteur (504) en fonction des informations d'enregistrement après la réussite de l'authentification de sécurité.

4. Système selon la revendication 1 ou 2, dans lequel les informations d'enregistrement comprennent au moins l'un des éléments suivants : des informations d'identité d'abonné du dispositif MTC en itinérance, des informations d'identité du dispositif MTC en itinérance et des informations d'identité de réseau du réseau visiteur ; dans lequel l'entité MTC-IWF du réseau domestique (502) enregistre, maintient et gère les informations d'enregistrement ; et l'entité MTC-IWF du réseau domestique (502) met à jour les informations d'enregistrement sauvegardées en fonction des informations d'enregistrement nouvellement rapportées par le dispositif MTC lorsque le dispositif MTC en itinérance se déplace vers d'autres réseaux visiteurs en plus du réseau visiteur et supprime les informations d'enregistrement sauvegardées lorsque le dispositif MTC en itinérance est détaché.

5. Système selon la revendication 1 ou 2, dans lequel l'entité MTC-IWF est l'une des entités suivantes :
une passerelle de sécurité MTC,
une entité IWF avec une fonction de passerelle de sécurité MTC et
une combinaison de la passerelle de sécurité MTC et de l'entité IWF avec une fonction de passerelle de sécurité MTC ; dans lequel la passerelle de sécurité MTC incluse par l'entité MTC-IWF dans le réseau domestique est interconnectée avec la passerelle de sécurité MTC incluse par l'entité MTC-IWF dans le réseau visiteur ; et l'entité IWF avec une fonction de passerelle de sécurité MTC incluse par l'entité MTC-IWF dans le réseau domestique est interconnectée avec l'entité IWF avec une fonction de passerelle de sécurité MTC incluse par l'entité MTC-IWF dans le réseau visiteur.

6. Appareil pour activer un dispositif de communication de type machine (MTC) en itinérance, comprenant :
un premier module de réception (802), configuré pour recevoir des informations d'enregistrement rapportées par un dispositif MTC qui appartient à un premier réseau et se déplace actuellement vers un deuxième réseau ;
un second module de réception (804), configuré pour recevoir un message de requête d'activation pour activer le dispositif MTC à partir d'un serveur MTC ; et
dans lequel l'appareil est configuré pour déterminer l'entité MTC-IWF du réseau visiteur (504) à laquelle le MTC est actuellement attaché en fonction des informations d'enregistrement ;
un module d'envoi (806), configuré pour envoyer le message de demande d'activation à l'entité MTC-IWF du deuxième réseau en fonction des informations d'enregistrement lors de la réception du message de demande d'activation pour activer le dispositif MTC depuis le serveur MTC.

7. Appareil pour activer le dispositif MTC en itinérance selon la revendication 6, dans lequel le module d'envoi comprend :
une unité d'authentification (1002), configurée pour effectuer une authentification de sécurité avec le serveur MTC du premier réseau après réception du message de demande d'activation ; et
une unité d'envoi (1004), configurée pour envoyer le message de demande d'activation à l'entité MTC-IWF du deuxième réseau en fonction des informations d'enregistrement après que l'authentification de sécurité est réussie.

8. Appareil pour activer le dispositif MTC en itinérance selon la revendication 6 ou 7, dans lequel les informations d'enregistrement comprennent au moins l'un des éléments suivants : des informations d'identité d'abonné du dispositif MTC, des informations d'identité du dispositif MTC et des informations d'identité de réseau du deuxième réseau.

9. Procédé pour activer un dispositif MTC en itinérance, comprenant :
lorsqu'un message de demande d'activation destiné à activer un dispositif MTC qui appartient à un premier réseau et se déplace actuellement vers un deuxième réseau est reçu d'un serveur MTC, la détermination, par une entité MTC-IWF du premier réseau, d'une entité MTC-IWF du deuxième réseau en fonction des informations d'enregistrement rapportées par le dispositif MTC (S1102) ; et
l'envoi, par l'entité MTC-IWF du premier réseau, du message de demande d'activation à l'entité MTC-IWF du deuxième réseau déterminée pour activer le dispositif MTC (S1104).

10. Procédé selon la revendication 9, dans lequel, avant que l'entité MTC-IWF du deuxième réseau soit déterminée en fonction des informations d'enregistrement rapportées par le dispositif MTC, le procédé comprend en outre :
lorsque le dispositif MTC est connecté au deuxième réseau, l'entité MTC-IWF du premier réseau reçoit et enregistre les informations d'enregistrement provenant du dispositif MTC ; et
la création, par l'entité MTC-IWF du premier réseau, d'une relation de routage entre l'entité MTC-IWF du premier réseau et l'entité MTC-IWF du deuxième réseau en fonction des informations d'enregistrement.

11. Procédé selon la revendication 9, dans lequel l'activation du dispositif MTC comprend :
l'activation, par l'entité MTC-IWF du deuxième réseau, du dispositif MTC en fonction du message de demande d'activation après réception du message de demande d'activation ; ou,
l'envoi, par l'entité MTC-IWF du deuxième réseau, du message de demande d'activation à une entité de réseau prédéterminée du deuxième réseau après réception du message de demande d'activation et l'activation, par l'entité de réseau prédéterminée du deuxième réseau, du dispositif MTC en fonction du message de demande d'activation après la réception du message de demande d'activation.

12. Procédé pour activer un dispositif MTC en itinérance selon la revendication 9, dans lequel l'envoi, par l'entité MTC-IWF du premier réseau, du message de requête d'activation à l'entité MTC-IWF du deuxième réseau déterminée comprend :
la réalisation, par l'entité MTC-IWF du premier réseau, d'une authentification de sécurité avec le serveur MTC du premier réseau après que le message de demande d'activation pour activer le dispositif MTC est reçu du serveur MTC ; et
une fois l'authentification de sécurité réussie, l'envoi, par l'entité MTC-IWF du premier réseau, du message de demande d'activation à l'entité MTC-IWF du deuxième réseau en fonction des informations d'enregistrement.

13. Procédé pour activer un dispositif MTC en itinérance selon l'une quelconque des revendications 9 à 12, dans lequel les informations d'enregistrement comprennent au moins l'un des éléments suivants : des informations d'identité d'abonné du dispositif MTC, des informations d'identité du dispositif MTC et des informations d'identité de réseau de le deuxième réseau ; dans lequel l'entité MTC-IWF du premier réseau enregistre, maintient et gère les informations d'enregistrement ; et l'entité MTC-IWF du premier réseau met à jour les informations d'enregistrement sauvegardées en fonction des informations d'enregistrement nouvellement rapportées par le dispositif MTC lorsque le dispositif MTC se connecte à d'autres réseaux visiteurs en plus du réseau visiteur et supprime les informations d'enregistrement sauvegardées du dispositif MTC lorsque le dispositif MTC est détaché.

14. Procédé d'activation d'un dispositif MTC en itinérance selon l'une quelconque des revendications 9 à 12, dans lequel l'entité MTC-IWF est l'une des suivantes :
une passerelle de sécurité MTC,
une entité IWF avec une fonction de passerelle de sécurité MTC et
une combinaison de la passerelle de sécurité MTC et de l'entité IWF avec une fonction de passerelle de sécurité MTC ; dans lequel la passerelle de sécurité MTC incluse par l'entité MTC-IWF dans le premier réseau est interconnectée avec la passerelle de sécurité MTC incluse par l'entité MTC-IWF dans le deuxième réseau ; et l'entité IWF avec une fonction de passerelle de sécurité MTC incluse par l'entité MTC-IWF dans le premier réseau est interconnectée avec une fonction de passerelle de sécurité MTC incluse par l'entité MTC-IWF dans le deuxième réseau.
